# DEMANDE DE BREVET EUROPEEN

(11) **EP 3 339 980 A1**
(43) Date de publication de la demande: **27.06.2018**
(21) Numéro de dépôt: 16206046.1
(22) Date de dépôt: 22.12.2016
(51) Int. Cl.: G04B 45/00, G04B 19/12, G04B 37/22

(54) **PROCÉDÉ DE RÉALISATION D'UN MOTIF SUR UNE PIÈCE HORLOGÈRE ET PIÈCE HORLOGÈRE**

(71) Demandeur: The Swatch Group Research and Development Ltd, 2074 Marin (CH)
(72) Inventeur: Grossenbacher, Pascal, 2000 Neuchâtel (CH); Allimann, Joël, 1565 Vallon (CH); Froellicher, Thomas, 2525 Le Landeron (CH); Golfier, Clare, 2520 La Neuveville (CH); Manasterski, Christian, 2525 Le Landeron (CH); Salihu, Fatmir, 2000 Neuchâtel (CH); Spassov, Vladislav, 1788 Praz (CH); Haemmerli, Alexandre, 2072 St-Blaise (CH); Laforge, Elias, 2000 Neuchâtel (CH)
(74) Mandataire: Ravenel, Thierry Gérard Louis

(57) **Abrégé**

L'invention se rapporte à un procédé de réalisation d'un motif métallique (16) sur une pièce horlogère (1), la pièce horlogère (1) comportant une surface à décorer (2) qui est réalisée dans un matériau non conducteur électriquement, le procédé comportant les étapes suivantes :
- (a) Dépôt d'une couche d'accroche (3) sur la surface à décorer (2), la couche d'accroche (3) étant conductrice électriquement;
- (b) Réalisation d'un motif en résine (5) sur la couche d'accroche (3), le motif en résine (5) définissant au moins une cavité traversante (11);
- (c) Dépôt galvanique d'une couche métallique (10) dans la cavité (11) du motif en résine (5), la couche métallique (10) recouvrant une partie (14) de la couche d'accroche (3);
- (d) Gravure du motif en résine (5) ;
- (e) Gravure de la partie (15) de la couche d'accroche (3) non recouverte par la couche métallique (10).

## Description

### Domaine de l'invention

L'invention se rapporte à un procédé de réalisation d'un motif métallique sur une surface non conductrice électriquement d'une pièce horlogère. L'invention se rapporte également à une pièce horlogère obtenue par un tel procédé.

### Arrière-plan de l'invention

Dans l'industrie horlogère, de nombreux procédés permettent de décorer une pièce en céramique ou en saphir avec des motifs métalliques.

Ainsi, le document EP1548524 propose de réaliser une creusure dans l'élément céramique, puis de déposer dans la creusure une première couche de type Ti, Ta, Cr, ou Th par une opération de dépôt physique en phase vapeur avec pulvérisation cathodique au magnétron suivie, sans mise à l'air, d'un dépôt PVD d'une couche de Au, Pt, Ag, Cr, Pd, TiN, CrN, Zr,N, Ni. Toutefois, ce procédé ne permet pas de former des motifs en relief sur l'élément céramique, de sorte que le contraste entre l'élément céramique et le motif métallique est peu marqué. Le motif métallique est donc peu apparent. En outre, les motifs que l'on peut réaliser avec ce procédé sont limités.

Le document EP2380864 propose également un procédé permettant d'incruster un motif métallique dans un élément céramique. Ce procédé comporte les étapes suivantes :
- former un corps en céramique ;
- graver par laser au moins un évidement comportant une profondeur minimale de 100 µm dans une face du corps en céramique, chaque au moins un évidement formant l'empreinte d'un décor;
- déposer une première couche de 50 nm sur l'ensemble de la face comportant ledit au moins un évidement ;
- déposer une deuxième couche électriquement conductrice de 50 nm sur l'ensemble de la face comportant ledit au moins un évidement en recouvrement de la première couche;
- déposer galvaniquement un matériau métallique à partir de la deuxième couche conductrice afin de remplir complètement ledit au moins un évidement ;
- retirer tous les dépôts de la surface du corps en céramique afin de n'en laisser que dans le creux dudit au moins un évidement.

Toutefois, ce procédé ne permet pas non plus de créer des motifs en relief sur une pièce horlogère.

### Résumé de l'invention

L'invention vise à remédier aux inconvénients de l'état de la technique en proposant un procédé permettant de former, sur une surface non conductrice électriquement, des motifs métalliques plus visibles que ceux de l'art antérieur.

L'invention vise également à proposer un procédé permettant de fixer solidement des motifs métalliques sur une surface non conductrice électriquement d'une pièce horlogère.

Un autre objet de l'invention est de proposer un procédé de fixation de motifs métalliques en relief sur une pièce horlogère comportant une surface non métallique.

Un autre objet de l'invention est de proposer un procédé permettant de fixer solidement sur une pièce horlogère comportant une surface non métallique des motifs de petite taille, réalisés dans une large gamme de matériaux.

Pour ce faire, est proposé selon un premier aspect de l'invention, un procédé de réalisation d'un motif métallique sur une pièce horlogère, la pièce horlogère comportant une surface à décorer qui est réalisée dans un matériau non conducteur électriquement, le procédé comportant les étapes suivantes :
- (a) Dépôt d'une couche d'accroche sur la surface à décorer, la couche d'accroche étant conductrice électriquement ;
- (b) Réalisation d'un motif en résine sur la couche d'accroche, le motif en résine définissant au moins une cavité traversante;
- (c) Dépôt galvanique d'une couche métallique dans la cavité du motif en résine, la couche métallique recouvrant une partie de la couche d'accroche;
- (d) Gravure du motif en résine ;
- (e) Gravure de la partie de la couche d'accroche non recouverte par la couche métallique.

Le procédé permet donc de réaliser des motifs métalliques en relief. On peut notamment réaliser des motifs métalliques présentant une épaisseur importante en saillie de la surface à décorer. En outre, le procédé permet de fabriquer facilement tout type de motifs métalliques puisque c'est la forme de la cavité du motif en résine qui définit la forme du motif métallique formé. On peut ainsi réaliser des motifs métalliques de toutes formes et de toutes tailles.

Le procédé selon le premier aspect de l'invention peut également présenter une ou plusieurs des caractéristiques ci-après prises individuellement ou selon toutes les combinaisons techniquement possibles.

Avantageusement, la couche d'accroche est déposée par dépôt physique en phase vapeur avec pulvérisation cathodique magnétron, ce qui permet la meilleure adhérence entre la couche d'accroche et la surface à décorer. Cette étape est de préférence précédée par une étape de gravure plasma pour augmenter l'adhérence de la couche d'accroche. Une structuration mécanique ou par laser de la surface spécifique sur laquelle le motif métallique final sera est aussi envisageable.

Selon un mode de réalisation, la couche d'accroche est une couche de titane.

Le motif en résine est de préférence réalisé par photolithographie. En effet, cette technique permet de réaliser facilement des motifs en résine de formes variées, sans décoller la couche d'accroche.

L'étape de réalisation du motif en résine par photolithographie comporte de préférence les sous-étapes suivantes :
- Dépôt d'une couche de résine sur la couche d'accroche ;
- Positionnement d'un masque au-dessus de la couche en résine ;
- Exposition de la couche en résine à travers le masque ;
- Mise en contact de la couche en résine avec un développeur afin de révéler le motif à réaliser.

Selon différents modes de réalisation :
- la résine peut être une résine dite « positive » : dans ce cas, la partie de la couche en résine exposée à la lumière devient soluble au développeur tandis que la partie de la couche en résine non exposée reste insoluble ;
- la résine peut être une résine dite « négative » : dans ce cas, la partie de la couche en résine exposée à la lumière reste insoluble tandis que la partie de la couche en résine non exposée devient soluble lorsqu'elle est mise en contact avec le développeur.

A l'issue de cette étape, on obtient un motif en résine qui définit au moins une cavité traversante, c'est-à-dire une cavité dont le fond est constitué par la couche d'accroche.

Avantageusement, la surface à décorer est réalisée dans un des matériaux suivants : céramique, saphir, rubis, émail, nacre, verre, quartz, silicium, peinture, polymère, ardoise ou autre roche.

Avantageusement, la couche métallique est une couche d'un des matériaux suivants : Au, alliage à base d'or, Pt, Ag, Cr, Pd, Ni, NiP, In, Rh, Cu, NiPd, NiW.

Avantageusement, la couche d'accroche présente une épaisseur comprise entre 5 nm et 50 nm, ce qui permet une adhérence optimale du motif métallique.

Avantageusement, la couche métallique présente une épaisseur comprise entre 1 µm et 500 µm et préférentiellement entre 20 µm et 300 µm, ce qui permet au motif métallique un relief suffisant pour être bien visible.

Avantageusement, la couche métallique présente une épaisseur inférieure ou égale à celle de la couche en résine, ce qui permet à la couche en résine de contenir la croissance de la couche métallique.

Avantageusement, le procédé comporte en outre, entre les étapes (c) et (d), une étape de structuration de surface de la couche métallique. Selon différents modes de réalisation, cette étape de structuration peut être : une étape de polissage, de soleillage, de satinage, de brossage, de giclage, d'azurage, de gravage ou encore diamantage. Le fait de structurer la surface de la couche métallique lorsqu'elle est encore emprisonnée dans le motif en résine permet de maintenir la couche métallique pendant la structuration de façon à ce qu'elle ne soit pas endommagée ou décollée pendant la structuration. En outre, le fait de structurer la surface de la couche métallique lorsqu'elle est encore emprisonnée dans le motif en résine permet de former des arêtes bien nettes au bord du motif métallique.

Avantageusement, la gravure du motif en résine est réalisée par gravure plasma, ce qui permet d'enlever le motif en résine sans endommager le motif métallique.

Avantageusement, la gravure de la couche d'accroche est une gravure humide, ce qui permet d'enlever toute la partie de la couche d'accroche non recouverte par le motif métallique sans attaquer la partie de la couche d'accroche recouverte par le motif métallique.

Le retrait de la couche d'accroche peut également être réalisé par ablation locale en utilisant un LASER.

Un deuxième aspect de l'invention concerne également une pièce horlogère obtenue par le procédé selon le premier aspect de l'invention.

Cette pièce horlogère comporte :
- une surface à décorer qui est réalisée dans un matériau non conducteur électriquement ;
- un motif métallique en saillie de la surface à décorer, le motif métallique comportant une couche d'accroche réalisée dans un matériau conducteur électriquement et une couche métallique déposée sur la couche d'accroche.

Avantageusement, la surface à décorer est réalisée dans un des matériaux suivants : céramique, saphir, rubis, émail, nacre, verre, quartz, silicium, peinture, polymère, ardoise ou autre roche.

Avantageusement, la couche métallique est une couche d'un des matériaux suivants : Au, alliage à base d'or, Pt, Ag, Cr, Pd, Ni, NiP, In, Rh, Cu, NiPd, NiW.

Avantageusement, la couche d'accroche présente une épaisseur comprise entre 5 nm et 50 nm, ce qui permet une adhérence optimale du motif métallique.

Avantageusement, la couche métallique présente une épaisseur comprise entre 1 µm et 500 µm et préférentiellement entre 20 µm et 300 µm, ce qui permet au motif métallique un relief suffisant pour être bien visible.

Avantageusement, la couche métallique présente une épaisseur inférieure ou égale à celle de la couche en résine, ce qui permet à la couche en résine de contenir la croissance de la couche métallique.

La pièce horlogère peut être tout ou partie d'un boitier, d'un bracelet, d'une lunette, d'un cadran, d'une glace, d'un poussoir, d'une couronne.

### Description sommaire des dessins

D'autres particularités et avantages ressortiront clairement de la description qui en est faite ci-après, à titre indicatif et nullement limitatif, en référence aux dessins annexés, dans lesquels :

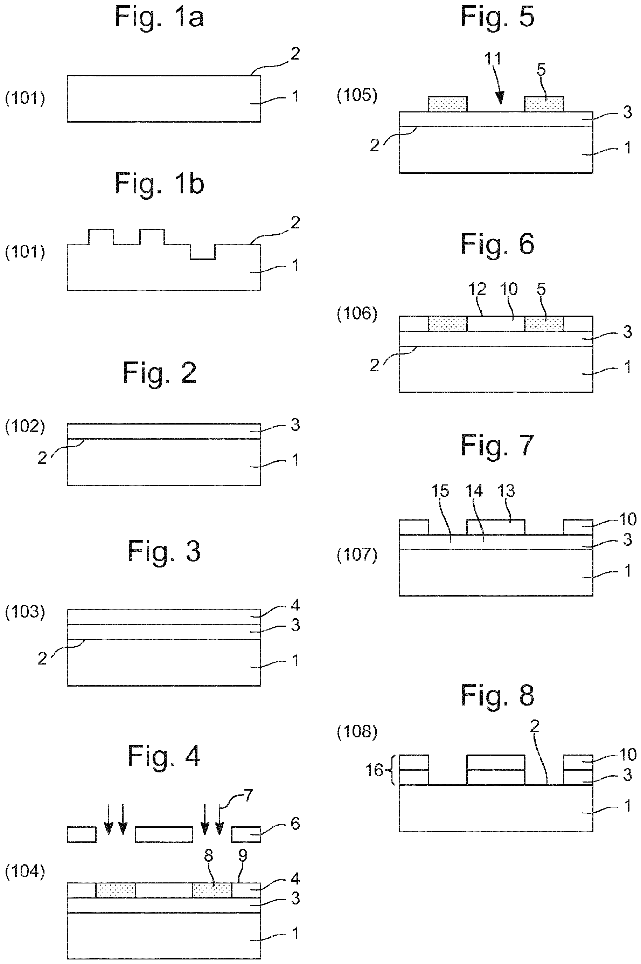

- les figures 1a à 8 représentent schématiquement différentes étapes d'un procédé selon un mode de réalisation de l'invention.

### Description détaillée d'un mode de réalisation

Un procédé selon un mode de réalisation va maintenant être décrit en référence aux figures 1a à 8.

Le procédé comporte une première étape de réalisation d'une pièce horlogère, représentée sur la figure 1a. Cette pièce horlogère comporte une surface 2 que l'on veut décorer avec un motif métallique. La surface à décorer 2 est réalisée dans un matériau non conducteur électriquement. Elle peut par exemple être en céramique, saphir, rubis, émail, nacre, verre, quartz, silicium, peinture, polymère, ardoise ou autre roche. Plus précisément, toute la pièce horlogère peut être réalisée dans le matériau non conducteur électriquement ou seulement la surface que l'on veut décorer. La pièce horlogère peut par exemple être un cadran sur lequel on peut réaliser des index métalliques. La pièce horlogère peut également être un boitier de montre sur lequel on veut inscrire un logo ou un slogan en motif métallique.

Par ailleurs, la surface à décorer 2 peut être plane comme représenté sur la figure 1a, ou alors elle peut être déjà pourvue d'un premier décor comme représenté sur la figure 1b. Ce premier décor peut par exemple comporter au moins un motif saillant. Ce motif saillant peut par exemple être un index. L'index peut par exemple être réalisé en émail ou en résine polymère colorée. Ce mode de réalisation est avantageux, car le motif saillant sera protégé lors des étapes ultérieures du procédé par la couche de résine. Le premier décor peut également comporter un motif gravé formé par une creusure. Le fait de réaliser une creusure dans la surface de la pièce horlogère préalablement au procédé peut permettre de diminuer la hauteur totale du motif métallique qui sera réalisé par la suite. En outre, cela peut aussi permettre de décorer la surface de la pièce horlogère avec un motif gravé dans cette pièce horlogère. Selon un mode de réalisation, le fond de la creusure peut être texturé. La creusure et sa texturation éventuelle sont de préférence réalisée(s) par gravure laser. La surface à décorer pourrait également être galbée ou courbée, entièrement ou en partie.

Le procédé comporte ensuite une étape 102 de dépôt d'une couche d'accroche 3 sur la surface à décorer 2. Cette étape est représentée schématiquement sur la figure 2. La couche d'accroche 3 permettra la fixation de la couche métallique que l'on formera par la suite. La couche d'accroche 3 est une couche conductrice électriquement. La couche d'accroche peut être réalisée en chrome ou en or, mais elle est de préférence réalisée en titane, ce qui permet au motif métallique d'avoir une meilleure adhérence même sur des surfaces lisses. La couche d'accroche présente de préférence une épaisseur comprise entre 5 nm et 50 nm. La couche d'accroche 3 est de préférence déposée par une technique de dépôt physique en phase vapeur avec pulvérisation cathodique magnétron, ce qui permet d'avoir une meilleure adhérence entre la surface à décorer 2 et la couche d'accroche 3.

Le procédé comporte ensuite une étape 105 de réalisation d'un motif en résine 5 sur la couche d'accroche 3. Ce motif en résine 5 est de préférence réalisé par une technique de photolithographie, comme représenté sur les figures 3 à 5. Pour ce faire, une couche en résine 4 est tout d'abord déposée sur la couche d'accroche 3. La résine utilisée est de préférence une résine photosensible négative SU-8. En effet, une telle résine présente l'avantage de bien résister aux étapes ultérieures du procédé. La couche de résine 4 est de préférence déposée par sprayage, c'est-à-dire qu'elle est diluée dans un solvant et vaporisée à l'aide d'une buse sur la surface à décorer. Cette technique de dépôt permet de former une couche d'épaisseur homogène même lorsque la surface à décorer comporte des parties en saillie ou des aspérités. Une fois la couche de résine 4 déposée, elle est solidifiée grâce à un recuit.

En référence à la figure 4, le procédé comporte ensuite une étape 104 d'exposition de la couche en résine 4 à un rayonnement UV 7 à travers un masque 6. Le rayonnement ultraviolet 7 entraîne une polymérisation des zones exposées 8, conférant ainsi à ces zones une tenue particulière au solvant de développement alors que les parties non insolées 9 seront solubles dans le solvant.

En référence à la figure 5, le procédé comporte ensuite une étape 105 d'exposition de la couche de résine à un solvant de façon à ce que les parties non insolées 9 soient dissoutes par le solvant. A la fin de cette étape, on obtient donc un motif en résine 5 formé par les zones de la couche en résine exposées au rayonnement UV. Le motif en résine 5 comporte au moins une cavité traversante 11. La cavité traversante 11 comporte un fond formé par la couche d'accroche 3.

En référence à la figure 6, le procédé comporte ensuite une étape 106 de dépôt galvanique d'une couche métallique 10 dans la ou les cavités 11 du motif en résine. La couche métallique 10 peut être une couche d'or, d'alliage à base d'or, Pt, Ag, Cr, Pd, Ni, NiP, In, Rh, Cu, NiPd, NiW. La résine SU-8 choisie présente l'avantage de résister au bain galvanique utilisé pour déposer la couche métallique 10. La couche métallique 10 présente une épaisseur inférieure ou égale au motif en résine, de façon à être totalement contenue dans la ou les cavités du motif en résine. En effet, le motif en résine permet de contraindre latéralement la couche métallique 10.

Le procédé peut ensuite comporter une étape de structuration de la surface 12 de la couche métallique 10. Cette étape de structuration permet de modifier l'état de surface de la couche métallique. Selon différents modes de réalisation, cette étape de structuration peut être : une étape de polissage, de soleillage, de satinage, de brossage, de giclage, d'azurage, de gravage ou encore diamantage. Elle peut également être réalisée par laser. L'étape de structuration est réalisée alors que la couche métallique est encore contenue dans la ou les cavités du motif en résine, de façon à ce que le motif en résine maintienne la couche métallique en place pendant l'étape de structuration. En outre, la présence du motif en résine permet d'avoir des angles vifs au bord de la couche métallique, ce qui permet d'avoir de meilleures finitions.

En référence à la figure 7, le procédé comporte ensuite une étape 107 d'élimination du motif en résine 5. Cette étape est de préférence réalisée par gravure plasma. A la fin de cette étape, la couche métallique forme un motif métallique 13 qui recouvre une/des partie(s) 14 de la couche d'accroche, tandis qu'une/des autre(s) partie(s) 15 de la couche d'accroche est/sont exposée(s).

En référence à la figure 8, le procédé comporte ensuite une étape 108 d'élimination de la (des) partie(s) 15 de la couche d'accroche qui sont exposées. La/les partie(s) 14 de la couche d'accroche qui est/sont recouverte(s) par la couche métallique est/sont protégée(s) par la couche métallique et ne sont pas endommagées par cette étape. Cette élimination a de préférence lieu à l'aide d'une gravure humide ou par laser. La gravure humide est de préférence effectuée en utilisant un acide.

A l'issue de cette étape, on obtient donc sur la surface à décorer 2 un motif métallique 16 en relief, le motif métallique étant formé par une couche d'accroche 3 et une couche métallique 10. Le motif métallique n'est localisé qu'aux endroits choisis, ces endroits ayant été délimités par le motif en résine. La tenue du motif métallique sur la surface à décorer 2 est assurée grâce à la couche d'accroche. L'apparence du motif métallique est déterminée par la couche métallique.

Naturellement, l'invention n'est pas limitée aux modes de réalisation décrits en référence aux figures et des variantes pourraient être envisagées sans sortir du cadre de l'invention. Ainsi, le procédé a été décrit lorsqu'on utilisait une résine négative, mais on pourrait également utiliser une résine positive. En outre, au lieu de déposer par galvanoplastie une seule couche métallique, on pourrait également déposer un empilement de couches métalliques. Ce mode de réalisation permettrait de former des motifs de couleurs différentes. Il est aussi possible d'obtenir des motifs métalliques de hauteurs différentes, via le même procédé en répétant certaines opérations, afin de mettre en évidence des différences de relief. Il est aussi possible pour améliorer l'adhésion de la couche d'accroche et de la couche métallique d'ajouter par exemple des trous d'accroche, par exemple gravés laser, et qui permettent des ancrages additionnels de la couche galvanique.

## Revendications

1. Procédé de réalisation d'un motif métallique (16) sur une pièce horlogère (1), la pièce horlogère (1) comportant une surface à décorer (2) qui est réalisée dans un matériau non conducteur électriquement, le procédé comportant les étapes suivantes :
- (a) Dépôt d'une couche d'accroche (3) sur la surface à décorer (2), la couche d'accroche (3) étant conductrice électriquement (102);
- (b) Réalisation d'un motif en résine (5) sur la couche d'accroche (3), le motif en résine (5) définissant au moins une cavité traversante (11) (105);
- (c) Dépôt galvanique d'une couche métallique (10) dans la cavité (11) du motif en résine (5), la couche métallique (10) recouvrant une partie (14) de la couche d'accroche (3) (106);
- (d) Gravure du motif en résine (5) (107);
- (e) Gravure de la partie (15) de la couche d'accroche (3) non recouverte par la couche métallique (10) (108).

2. Procédé selon la revendication précédente, dans lequel le motif en résine (5) est réalisé par photolithographie.

3. Procédé selon l'une des revendications précédentes, dans lequel la couche d'accroche (3) est une couche de titane.

4. Procédé selon l'une des revendications précédentes, dans lequel la couche d'accroche (3) est déposée par dépôt physique en phase vapeur avec pulvérisation cathodique magnétron.

5. Procédé selon l'une des revendications précédentes, dans lequel la surface à décorer (2) est réalisée dans un des matériaux suivants : céramique, saphir, rubis, émail, nacre, verre, quartz, silicium, peinture, polymère, ardoise ou roche.

6. Procédé selon l'une des revendications précédentes, dans lequel la couche métallique (10) est une couche d'un des matériaux suivants : Au, alliage à base d'or, Pt, Ag, Cr, Pd, Ni, NiP, In, Rh, Cu, NiPd, NiW.

7. Procédé selon l'une des revendications précédentes, dans lequel la couche d'accroche (3) présente une épaisseur comprise entre 5 nm et 50 nm.

8. Procédé selon l'une des revendications précédentes, dans lequel la couche métallique (10) présente une épaisseur comprise entre 1 µm et 500 µm et préférentiellement entre 20 µm et 300 µm.

9. Procédé selon l'une des revendications précédentes, dans lequel la couche métallique (10) présente une épaisseur inférieure ou égale à celle de la couche en résine (3).

10. Procédé selon l'une des revendications précédentes, comportant en outre, entre les étapes (c) et (d), une étape de structuration de surface de la couche métallique.

11. Procédé selon l'une des revendications précédentes, dans lequel la gravure du motif en résine (5) est réalisée par gravure plasma.

12. Procédé selon l'une des revendications précédentes, dans lequel la gravure de la couche d'accroche (3) est une gravure humide.

13. Pièce horlogère obtenue par le procédé selon l'une des revendications précédentes.

14. Pièce horlogère comportant:
- une surface à décorer (2) qui est réalisée dans un matériau non conducteur électriquement ;
- (16) un motif métallique (16) en saillie de la surface à décorer (2), le motif métallique (16) comportant une couche d'accroche (3) réalisée dans un matériau conducteur électriquement et une couche métallique (10) déposée sur la couche d'accroche (3).
